(19) **Europäisches Patentamt European Patent Office Office européen des brevets**

(11) **EP 2 926 208 B1**

(12) **EUROPEAN PATENT SPECIFICATION**

(45) Date of publication and mention of the grant of the patent:
**23.10.2019 Bulletin 2019/43**

(51) Int Cl.:
*G06F 1/00* *(2006.01)*        *G01M 1/34* *(2006.01)*
*B60C 19/00* *(2006.01)*        *G01M 17/02* *(2006.01)*

(21) Application number: **13858707.6**

(22) Date of filing: **27.11.2013**

(86) International application number:
**PCT/US2013/072241**

(87) International publication number:
**WO 2014/085595 (05.06.2014 Gazette 2014/23)**

(54) **UNIFORMITY CORRECTION USING PROGRESSIVE ABLATION**

UNIFORMITÄTSKORREKTUR MITTELS PROGRESSIVER ABLATION

CORRECTION D'UNIFORMITÉ UTILISANT UNE ABLATION PROGRESSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012 PCT/US2012/067198**

(43) Date of publication of application:
**07.10.2015 Bulletin 2015/41**

(73) Proprietor: **Compagnie Générale des Etablissements Michelin 63000 Clermont-Ferrand (FR)**

(72) Inventors:
• **NICHOLSON, Verner, Steve Greenville, South Carolina 29605 (US)**
• **APPLEMAN, Casey Scott Greenville, South Carolina 29605 (US)**

(74) Representative: **Casalonga Casalonga & Partners Bayerstraße 71/73 80335 München (DE)**

(56) References cited:
**EP-A1- 0 766 079        WO-A1-2011/002595**
**US-A- 5 263 284        US-A- 6 139 401**
**US-A1- 2004 068 374        US-A1- 2012 059 547**
**US-A1- 2012 059 547        US-A1- 2012 095 587**

**Description**

**PRIORITY CLAIM**

**FIELD**

The present disclosure relates generally to systems and methods for improving tire uniformity, and more particularly to systems and methods for improving tire uniformity by selective removal of material along tire bead locations in a cured tire.

Methods and systems for reducing the magnitude of uniformity parameters in a cured tire are known in the prior art for example from the following documents:

WO 2011/002595 A1, which is generally directed to Uniformity Correction by Ablation at Different Track Locations Along a Tire Bead. D1 does teach determining an ablation pattern for one or more tracks about the bead area of a tire. Indeed, D1 teaches weighting tracks to identify one or more tracks along each tire bead as a desired ablation location. However, this prior art document does not teach progressively determining one or more ablation patterns for the plurality of tracks according to the ablation order.

EP 0 766 079 A1 is directed to a method of correcting conicity, radial run out, and force variations in a pneumatic tire and teaches that the tire is subjected to three consecutive corrective grind routines; a lateral force variation corrective grind, a radial run-out corrective grind, and finally a radial force variation corrective grind.

US 5 263 284 A1 is directed to a method of simultaneously correcting excessive radial force variations and excessive lateral force variations in a pneumatic tire and it teaches determining a radial grind component and two lateral grind components.

US 2004/068374 A1 is directed to a method and apparatus for correcting tire uniformity and it discloses calculating virtual templates to direct the correction of the tire.

US 6 139 401 A is directed to a method of correcting the imbalance of a pneumatic tire with a tire uniformity machine and it teaches advancing a grinder by incremental units of distance to remove material from a tire. However, none of these documents teaches or suggests determining an ablation order specifying an order in which ablation patterns for the plurality of tracks are to be calculated.

US2012059547 A1 relates to a method to control a vehicle having a plurality of wheels includes monitoring desired vehicle dynamics, determining a desired corner force and moment distribution based upon the desired vehicle dynamics and a real-time closed form dynamics optimization solution, and controlling the vehicle based upon the desired corner force and moment distribution. The real-time closed form dynamics optimization solution is based upon a minimized center of gravity force error component, a minimized control energy component, and a maximized tire force reserve component.

**BACKGROUND**

Tire non-uniformity relates to the symmetry (or lack of symmetry) relative to the tire's axis of rotation in certain quantifiable characteristics of a tire. Conventional tire building methods unfortunately have many opportunities for producing non-uniformities in tires. During rotation of the tires, non-uniformities present in the tire structure produce periodically-varying forces at the wheel axis. Tire non-uniformities are important when these force variations are transmitted as noticeable vibrations to the vehicle and vehicle occupants. These forces are transmitted through the suspension of the vehicle and may be felt in the seats and steering wheel of the vehicle or transmitted as noise in the passenger compartment. The amount of vibration transmitted to the vehicle occupants has been categorized as the "ride comfort" or "comfort" of the tires.

Tire uniformity characteristics, or attributes, are generally categorized as dimensional or geometric variations (radial run out (RRO) and lateral run out (LRO)), mass variance, and rolling force variations (radial force variation, lateral force variation and tangential force variation). Uniformity measurement machines often measure the above and other uniformity characteristics by measuring force at a number of points around a tire as the tire is rotated about its axis.

Once tire uniformity characteristics are identified, correction procedures may be able to account for some of the uniformities by adjustments to the manufacturing process. Some of the uniformities may be hard to correct during the manufacturing process and so additional correction procedures are needed to correct remaining non-uniformities of cured tires. A number of different techniques may be available, including but not limited to the addition and/or removal of material to a cured tire and/or deformation of a cured tire.

One known technique for correcting tire non-uniformities is the use of ablation along a bead portion of the tire. For instance, U.S. Patent Application Publication No. 2012/0095587, which is commonly assigned to the assignee of the present disclosure and which is incorporated by reference herein for all purposes, discloses the use of laser ablation along various tracks on the bead portion of a tire, such as along a bead seat zone, a lower flange zone, and an upper flange zone, of the tire. In particular, an ablation pattern for the tire beads is calculated to reduce the magnitude of one or more harmonics of at least one uniformity parameter. Material along the bead portion of the tire is then selectively removed using the calculated laser ablation pattern.

Calculation of ablation patterns to correct for certain uniformity parameters, such as lateral force variation and other uniformity parameters, can be difficult. For instance, there is generally no analytical way to estimate ablation patterns to correct for lateral force variation for both the clockwise and counterclockwise rotation of a tire by analyzing collected uniformity data. Rather, a numerical approach is typically required to estimate ablation patterns to correct for lateral force variation for both clockwise and counterclockwise rotation. Given the complex components contributing to lateral force variation and differences in lateral force variation when rotating a tire in the clockwise and counterclockwise directions, estimating ablation patterns using numerical approaches can require significant computing resources.

In addition, existing ablation pattern calculation techniques typically simultaneously estimate ablation patterns for multiple tracks along the bead of the tire, such as ablation patterns for tracks along the bead seat zone, the lower flange zone, and the upper flange zone. This can require calculating multiple parameters (e.g. six parameters to determine ablation patterns for three tracks) using complex non-linear solution techniques, leading to increased use of computational resources and computation time. Computation time can be critical in a tire manufacturing setting since the ablation machine needs to be ready to process the next tire when the next tire arrives.

Thus, a need exists for an improved system and method for calculating ablation patterns to correct for lateral force variation and other uniformity parameters. A system and method that can reduce overall computation time as well as overall ablation time and total ablation of the tire would be particularly useful.

## SUMMARY

Aspects and advantages of the invention will be set forth in part in the following description, or may be obvious from the description, or may be learned through practice of the invention.

One example aspect of the present disclosure is directed to a method for reducing the magnitude of a uniformity parameter in a cured tire. The method includes determining an ablation order for a plurality of tracks along a bead of a tire based at least in part on sensitivity data for the plurality of tracks, the ablation order specifying the order in which ablation patterns for the plurality of tracks are to be calculated. The method further includes progressively determining, with a computing device, one or more ablation patterns according to the ablation order to reduce the magnitude of the uniformity parameter for the tire. The method further includes selectively removing material from the bead of the tire in accordance with the one or more ablation patterns.

In a particular implementation of this example aspect of the present disclosure, the one or more ablation patterns are progressively determined according to a progression scheme defined by the ablation order. The progression scheme has one or more stages. Each stage of the progression scheme is associated with one of the plurality of tracks specified in the ablation order. For each stage in the progression scheme, the method can include determining an ablation pattern to reduce the magnitude of the uniformity parameter and determining an estimated uniformity parameter magnitude resulting from the ablation pattern. The one or more ablation patterns can be progressively determined according to the progression scheme until the estimated uniformity parameter magnitude is below a predefined threshold.

Another example aspect of the present disclosure is directed to a uniformity correction system for reducing the magnitude of a uniformity parameter in a cured tire. The system includes a tire fixture on which a tire is configured to be securely mounted and an ablation device configured to provide ablation of a tire mounted to the tire fixture. The ablation device is configured to rotate about the tire during ablation of the tire. The system further includes a computer control system coupled to the ablation device and the tire fixture. The computer control system is configured to determine an ablation order for a plurality of tracks along a bead of the tire based at least in part on sensitivity data for the plurality of tracks, the ablation order specifying the order in which ablation patterns for the plurality of tracks are to be calculated, the computer control system configured to progressively determine one or more ablation patterns according to the ablation order to reduce the magnitude of the uniformity parameter for the tire. The computer control system is further configured to selectively control the tire rotational speed and ablation power such that tire material is selectively removed from at least one bead of the tire in accordance with the one or more ablation patterns.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

**BRIEF DESCRIPTION OF THE DRAWINGS**

A full and enabling disclosure of the present invention, including the best mode thereof, directed to one of ordinary skill in the art, is set forth in the specification, which makes reference to the appended figures, in which:

FIG. 1 is a cross-sectional view of a radial tire, which can be corrected according to example aspects of the present disclosure.

FIG. 2 depicts multiple track locations along the bead of the tire suitable for ablation to reduce the magnitude of selected tire uniformity parameters according to example aspects of the present disclosure.

FIG. 3 depicts an example ablation pattern calculated to reduce the magnitude of selected tire uniformity parameters according to an example aspect of the present disclosure. FIG. 3 plots the desired ablation depth (D) along the ordinate and the angular location ($\theta$) around the bead of the tire along the abscissa.

FIG. 4 depicts a block diagram of a system according to an example embodiment of the present disclosure.

FIG. 5 illustrates an example ablation segment in the form of a grayscale bitmap image. The grayscale bit map image is plotted relative to the vertical position (H) of the bitmap image.

FIG. 6 provides a graphical illustration of ablation depth represented by the grayscale image of FIG. 5. FIG. 6 plots the vertical position (H) of the bitmap image along the abscissa and the ablation depth (D) along the ordinate.

FIG. 7 provides a perspective view of multiple ablation segments removed along a tire bead.

FIG. 8 depicts a flow diagram of an example method for reducing the magnitude of a uniformity parameter for a tire according to an example embodiment of the present disclosure.

FIG. 9 depicts vector representations of example lateral force variation uniformity parameters for a tire.

FIG. 10 depicts a flow diagram of an example method for determining an ablation order for a plurality of tracks according to an example embodiment of the present disclosure.

FIGS. 11 and 12 depict example sensitivity vectors determined for a plurality of tracks for a tire according to an example embodiment of the present disclosure.

FIG. 13 depicts a flow diagram of an example method for progressively determining one or more ablation patterns according to a progression scheme defined by the ablation order according to an example embodiment of the present disclosure.

FIGS. 14-16 depict vector representations of the reduction of lateral force variation according to an example embodiment of the present disclosure.

FIG. 17 depicts vector representations of example ablation patterns determined according to example aspects of the present disclosure.

FIGS. 18-20 depict simulation results for progressively determining ablation patterns to reduce the magnitude of a uniformity parameter according to an example embodiment of the present disclosure.

DETAILED DESCRIPTION

Overview

Generally, the present disclosure is directed to systems and methods for determining one or more ablation patterns for selectively removing material from tire bead locations to correct for non-uniformity characteristics of a cured tire, such as to correct for lateral force variation, radial force variation, and/or other uniformity parameters of a cured tire. According to aspects of the present disclosure, the one or more ablation patterns can be progressively determined according to a progression scheme defined by an ablation order for a plurality of tracks along the bead of the tire to reduce the computational resources required for calculating the one or more ablation patterns and, in some cases, to reduce ablation time and total ablation for the tire.

More particularly, a plurality of tracks for selectively removing material from the bead of a tire can be identified. The plurality of tracks can include, for instance, at least one track along an upper flange zone of a bead of the tire, at least one track along a lower flange zone of a bead of the tire, and at least one track along a bead seat zone of a bead of the tire. An ablation order that specifies the order in which ablation patterns for the plurality of tracks are to be calculated can be analytically determined based on sensitivity data associated with the plurality of tracks. For instance, the ablation order can rank the plurality of tracks based on sensitivity data such that ablation patterns for the most sensitive tracks are calculated first and ablation patterns for the least sensitive tracks are calculated last.

The sensitivity data of a track provides a measure of the expected change in a uniformity parameter, such as lateral force variation or radial force variation, from implementing an ablation pattern along the track. The sensitivity of a track can be measured by measuring a change in magnitude of a uniformity parameter (e.g. a change in force in the case of lateral or radial force variation) resulting from implementing an ablation pattern along the track at a set maximum depth of ablation. The sensitivity data used to rank the plurality of tracks can be analytically determined from sensitivity measurements performed on a plurality of tires and then used to determine the ablation order for the plurality of tracks.

Once the ablation order for a plurality of tracks has been determined, ablation patterns for the plurality of tracks can be progressively calculated according to the ablation order. The progressive calculation of the ablation patterns can proceed such that the uniformity parameter for the tire is corrected by calculating an ablation pattern for one track specified in the ablation order at a time. After the ablation pattern for the one track is calculated, a new uniformity parameter magnitude for the tire can be estimated. The progression can then proceed to the next track specified in the ablation order where this process can be repeated. The progression through the plurality of tracks specified in the ablation order can proceed until the estimated uniformity parameter magnitude for the tire falls below a threshold. Once all of the necessary ablation patterns have been determined, tire material can be selectively removed, for instance using laser ablation techniques, from the bead of the tire according to the ablation patterns.

Progressive determination of ablation patterns provides advantages over a simultaneous approach that simultaneously determines ablation patterns for all tracks at the same time. For instance, the progressive determination of ablation patterns can result in determining ablation patterns for less than all of the available tracks because ablation patterns only need to be determined for those tracks necessary to reduce an estimated uniformity parameter magnitude below a threshold. As a result, tire material can be selectively removed only along those tracks necessary to correct the uniformity parameter, leading to faster ablation times and reduced total ablation. This is particularly true in cases where the ablation order ranks the tracks for ablation in terms of sensitivity such that ablation patterns are determined for more sensitive tracks before proceeding to less sensitive tracks.

The progressive determination of ablation patterns also leads to faster computing times. In particular, the calculation of each ablation pattern can be treated as a single tire, single track problem for reducing the uniformity parameter for the tire. This reduces the number of parameters necessary to be solved in calculating the ablation pattern. For instance, in calculating an ablation pattern to correct for lateral force variation, a non-linear solver can be used to estimate two parameters for the ablation pattern for the single track as opposed to solving multiple parameters for multiple tracks (e.g. six parameters for three tracks). Reducing the number of parameters leads to much quicker computer processing times and is less prone to finding local minima than the multiple track case. In addition, the progressive determination of ablation patterns may not require calculation of ablation patterns for all tracks. Rather, ablation patterns are calculated on a track by track basis until the estimated uniformity parameter magnitude is reduced below a threshold. As a result, the computational resources required for calculating the ablation patterns can be reduced.

Uniformity Correction by Ablation Along Selected Tracks of the Bead of the Tire

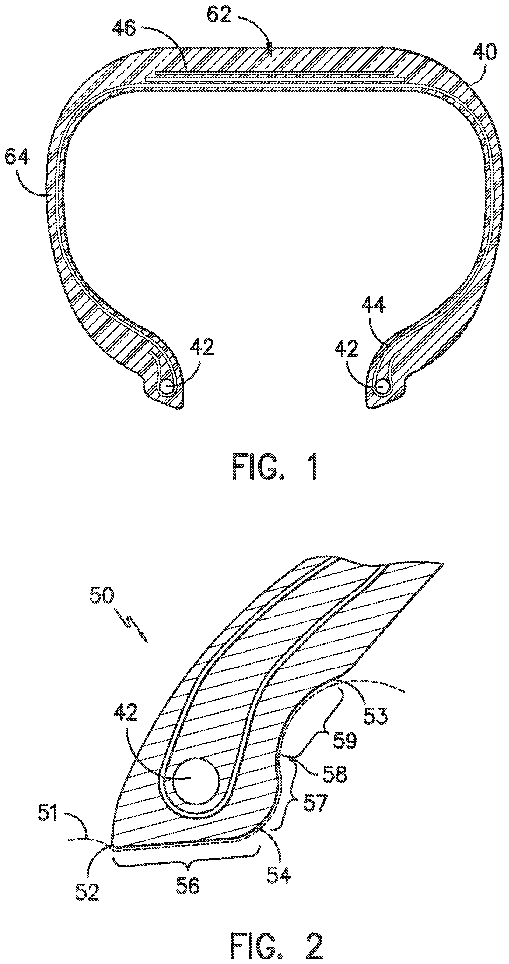

With reference now to the FIGS., example embodiments of the present disclosure will now be discussed in detail. FIG. 1 provides a schematic illustration of a radial pneumatic tire 40 for uniformity correction in accordance with the present disclosure. The tire 40 is rotatable about a longitudinal central axis of rotation. The tire 40 includes a pair of bead wires 42 which are substantially inextensible in a circumferential direction. The first and second beads 42 are spaced apart in a direction parallel to the central axis. Circumferential is defined as being substantially tangent to a circle having its center at the axis and contained in a plane parallel to the mid-circumferential plane of the tire.

A carcass ply 44 extends between each of the respective beads 42. The carcass ply 44 has a pair of axially opposite end portions which extend around the respective bead 42. The carcass ply 44 is secured at the axially opposite end portions to the respective bead 42. The carcass ply 44 includes a plurality of substantially radially extending reinforcing members each of which are made of a suitable configuration and material, such as several polyester yarns or filaments twisted together. It will be apparent that the carcass ply 44 is illustrated as a single ply but may include any appropriate number of carcass plies for the intended use and load of the tire 40. It will also be apparent that the reinforcing member may be a monofilament or any other suitable configuration or material.

The tire 40 illustrated also includes a belt package 46. The belt package 46 includes at least two annular belts. One of the belts is located radially outwardly of the other belt. Each belt includes a plurality of substantially parallel extending reinforcing members made of a suitable material, such as a steel alloy. The tire 40 also includes rubber for the tread 62 and sidewalls 64. The rubber may be of any suitable natural or synthetic rubber, or combination thereof.

FIG. 2 provides a magnified cross-sectional view of a tire bead, generally showing the various portions of such tire portion relative to its seated location on a wheel rim. For example, each tire bead area 50 includes a tire bead 42 and its surrounding rubber portions that are configured to define a bead profile as shown in FIG. 2. In general, the profile portion of the tire bead between toe 52 and an exit point 53 is fitted against a portion of a wheel rim for secure mounting thereto. Dotted line 51 represents an example portion of a wheel rim against which tire bead area 50 may be secured for mounting. The bottom surface of the bead profile generally defined between toe 52 and heel 54 is referred to herein as the bead seat zone 56. The profile portion between heel 54 and exit point 53 is referred to generally as the flange, and includes a lower flange zone 57 between the heel and a flange transition point 58 and an upper flange zone 59 between the flange transition point 58 and the exit point 53.

As discussed in more detail below, the magnitude of selected uniformity parameters, including selected harmonics of uniformity parameters, can be reduced by selectively removing material along one or more tracks in the bead seat zone 56, lower flange zone 57, and/or upper flange zone 59 of the bead area 50 of the tire. Tire uniformity characteristics that may be corrected generally include rolling force variations such as radial force variation and lateral force variation and even other parameters including but not limited to mass variance.

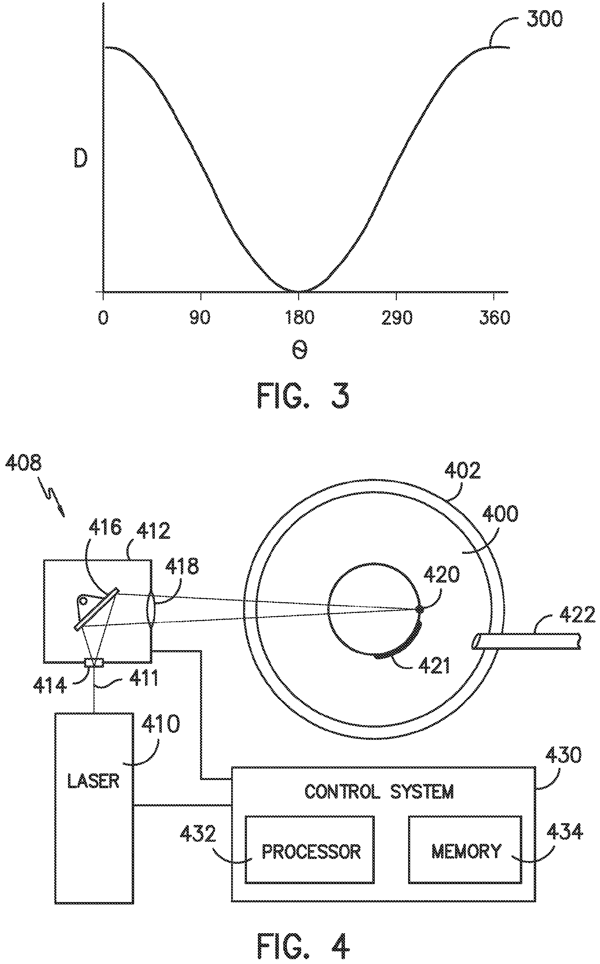

In accordance with aspects of the present disclosure, material from one or more tracks in the bead seat zone 56, lower flange zone 57, and/or upper flange zone 59 can be selectively removed according to a calculated ablation pattern. An example ablation pattern 300 is depicted in FIG. 3. As shown, the example ablation pattern 300 defines a desired ablation depth relative to an angular location around the bead of the tire. The ablation pattern 300 can be used to reduce, for instance, a first harmonic associated with a uniformity parameter, such as lateral force variation or radial force variation associated with a tire. As will be discussed in more detail below, the example ablation pattern 300 shown in FIG. 3 can be calculated according to a progression scheme defined by an ablation order for the plurality of tracks.

Once the ablation patterns for one or more of the tracks in the bead seat zone 56, lower flange zone 57, and/or upper flange zone 59 have been calculated, tire material can be selectively removed from the bead of the tire according to the calculated ablation pattern using a plurality of ablation techniques. For instance, in one embodiment, tire material can be selectively removed using laser ablation techniques. Laser ablation techniques can be preferable because it is able to accomplish removal of discrete ablation segments around the bead of the tire with precise control. To the extent that other rubber removal techniques, such as but not limited to grinding, sandblasting, water jet removal and the like may be implemented to achieve the same precision levels as laser ablation, the present subject matter may also employ such alternative removal techniques.

FIG. 4 illustrates an example block diagram of a system for reducing identified uniformity parameters, such as radial force variation or lateral force variation, using laser ablation. As shown, a tire 400 is securely mounted to a mounting fixture 402, which generally serves as a stationary hub to hold the tire bead stationary relative to a laser ablation device 408. The laser ablation device 408 can selectively rotate about a tire held stationary by the mounting fixture 402 to achieve ablation along one or more tracks along the tire bead.

Laser ablation device 408 can include a laser 410, which can include a fixed-point or sheet-of-light laser system that outputs a laser beam 411 having a sufficient amount of power to perform selective removal of tire rubber material. In one particular example, laser ablation device 410 can include a carbon dioxide ($CO_2$) laser. After output by laser ablation device 410, laser beam 411 can be provided to a deflection element 412, which can include a beam splitter 414, deflector 416, imaging lens 418, and/or other optical elements. Imaging lens 418 focuses the illumination of the laser beam 411 to a focal point 420 on the tire 400 to remove rubber in an ablated area 421 along a tire bead. A vacuum 422 or other cleaning tool may be provided to extract any removed rubber or other waste from the ablation area. Additional outlets may provide a controlled output of gaseous medium (e.g., a nitrogen gas) to facilitate laser ablation and suppress potential flames at the ablation point.

The system of FIG. 4 is intended to illustrate laser ablation using a single laser and single focal point (i.e., removal at one tire bead at a time). However, it should be appreciated that multiple lasers be used to perform ablation at multiple focal points (e.g., at both tire beads). For instance, in a particular embodiment, a first laser can be used to independently provide ablation of a first tire bead and a second laser can be used to independently provide ablation of a second tire bead. Each of the first laser and the second laser can be independently rotated about a tire held in a fixed location by a tire fixture to achieve ablation along selected tracks for both the first and second tire beads.

As shown in FIG. 4, a computer control system 430 controls one or more components of laser ablation device 408 to achieve the desired ablation pattern along one or more tracks along the bead of the tire. The computer control system 430 can generally include such components as at least one memory/media element or database for storing data and software instructions as well as at least one processor. According to particular aspects of the present disclosure, the computer control system 430 can control the laser ablation device 408 to rotate relative to a fixed tire to achieve ablation along one or more tracks of the tire bead.

In the particular example of FIG. 4, a processor(s) 432 and associated memory 434 are configured to perform a variety of computer-implemented functions (i.e., software-based data services). The memory 434 can store software and/or firmware in the form of computer-readable and executable instructions that will be implemented by the processor(s) 432. Memory 434 can also store data which is accessible by processor(s) 432 and which can be acted on pursuant to the software instructions stored in the memory 434. Memory 434 can be provided as a single or multiple portions of one or more varieties of computer-readable media, such as but not limited to any combination of volatile memory (e.g., random access memory (RAM, such as DRAM, SRAM, etc.) and nonvolatile memory (e.g., ROM, flash, hard drives, magnetic tapes, CD-ROM, DVD-ROM, etc.) or any other memory devices including diskettes, drives, other magnetic-based storage media, optical storage media and others.

According to aspects of the present disclosure, memory 434 can store instructions that when executed by the processor 432 cause the processor to perform operations. For instance, the instructions can cause the processor 432 to perform operations to implement the progressive calculation of ablation patterns according to example embodiments of the present disclosure.

In one particular implementation, the computer control system 430 can control the ablation of the bead of the tire according to the ablation patterns using a plurality of direct address commands. The direct address commands can specify operating parameters for discrete ablation segments at specific angular locations or "addresses" on the bead of the tire. More particularly, the desired ablation pattern can be broken down into a plurality of discrete ablation segments. These ablation segments represent small portions of the total ablation pattern that will be removed in incremental fashion by the ablation device. The direct address commands specify locations and other parameters for the plurality of discrete ablation segments to achieve a desired ablation pattern. Example techniques for determining direct address commands from one or more ablation patterns are disclosed in PCT/US11/66699, which is commonly assigned to the assignee of the present disclosure and which is incorporated by reference herein.

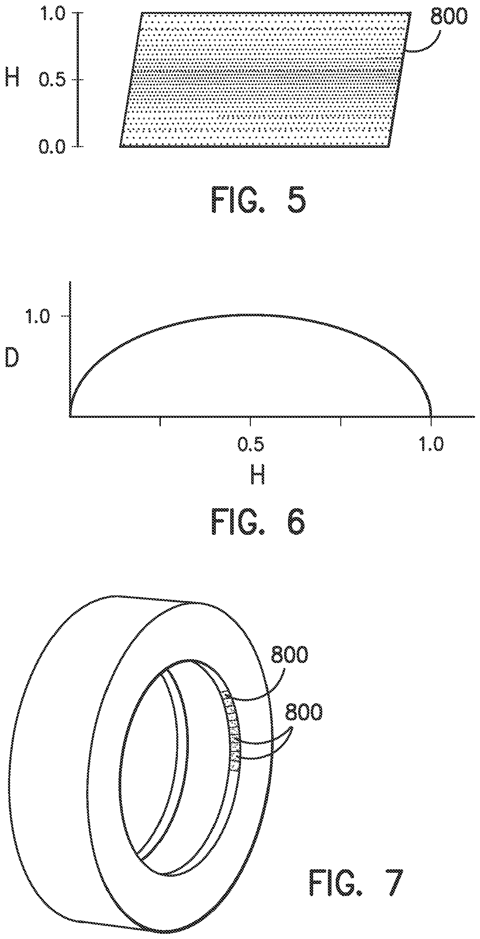

In a particular example, the ablation segments can be associated with a bitmap image which correlates the ablation depth along a specified track to a varied-tone graphic image (e.g., having color or grayscale variations) representative of such depths. Such varied-tone images can be interpreted by software control of the ablation device to produce desired ablation depths at specific angular locations on the bead of the tire. FIG. 5 shows an example grayscale bitmap image for a particular discrete ablation segment 800 that may be performed by a laser in accordance with some particular embodiments of the present invention. In such ablation segment, the lower dot density representative of lighter grayscale tones correspond to smaller ablation depths and higher dot density representative of darker grayscale tones correspond to larger ablation depths.

FIG. 6 provides a graphical example of the ablation depths represented by the dotted/grayscale image of FIG. 5. Assume, for example, that the highest dot density representing a darkest grayscale tone shown in FIG. 5 corresponds to an ablation depth of 1 mm, such that the darkest portion of the image occurs around the middle of the vertical range from top to bottom of the bitmap image. The corresponding graph in FIG. 6 plots the vertical position of the bitmap image along the abscissa and the ablation depth (e.g., in mm) along the ordinate. As shown, the variation in ablation depth follows a generally smooth transitional curve as opposed to sharp contrasting regions.

FIG. 7 generally illustrates how multiple ablation segments 800 can be transposed along a bead surface. Although only a single row of ablation segments is illustrated along a tire bead, it should be appreciated that multiple rows and columns of such ablation patterns may exist to achieve the desired ablation pattern. Such groupings of ablation segments may also be correlated to more than one track/area along a tire bead. For example, one set of ablation segments may be translated from an ablation pattern determined for a track along a tire bead seat zone, while another set of ablation segments may be translated from an ablation pattern determined for a track along a lower flange zone, while yet another set of ablation segments may be translated from an ablation pattern determined for a track along an upper flange zone.

Example Method for Correcting One or More Uniformity Parameters

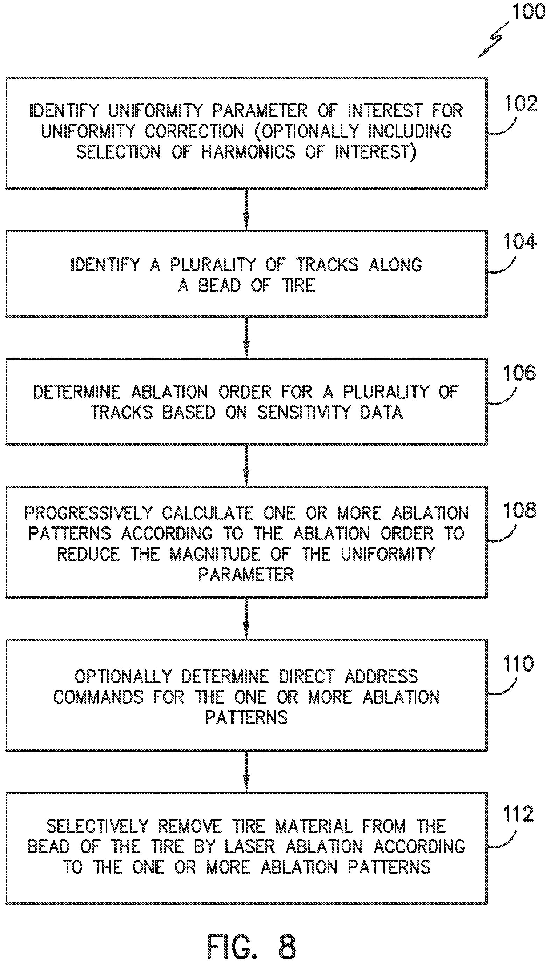

FIG. 8 depicts an example method (100) for reducing the magnitude of a uniformity parameter in a cured tire according to an example embodiment of the present disclosure. Although FIG. 8 depicts steps performed in a particular order for purposes of illustration and discussion, the methods discussed herein are not limited to any particular order or arrangement. One skilled in the art, using the disclosures provided herein, will appreciate that various steps of any of the methods disclosed herein can be omitted, rearranged, combined, expanded, and/or adapted in various ways without deviating from the scope of the present disclosure.

At (102), the method includes identifying parameters of interest for uniformity correction, which parameters may optionally include one or more harmonics of interest. Tire uniformity parameters may generally include both dimensional or geometric variations (such as radial run out (RRO) and lateral run out (LRO)) as well as rolling force variations (such as radial force variation, lateral force variation and tangential force variation) and even other parameters including but not limited to mass variance, conicity, ply steer and the like. While the present disclosure will focus its discussion on the correction of lateral force variation and radial force variation for purposes of illustration and discussion, those of ordinary skill in the art, using the disclosures provided herein, should appreciate that correction for other particular uniformity characteristics may be possible in accordance with the disclosed techniques.

Referring still to FIG. 1, the method at (102) may also optionally involve identification of which harmonics to correct for each identified uniformity parameter of interest. In some embodiments, correction of selected identified harmonics (e.g., 1st, 2nd, 3rd and/or 4th harmonics) may be desired for the parameter(s) of interest. In other embodiments, correction of all harmonics may be desired by considering the complete cyclic, or composite waveform, of the uniformity parameter(s).

The identification of which uniformity characteristics to correct may be determined in part by the results of uniformity testing performed on a manufactured tire. For example, a cured tire may be tested to determine whether the tire has radial and/or lateral force variations (and/or other characteristics) that fall within certain predetermined acceptable ranges for delivering the tire to a customer. If not, it may be possible to correct the uniformity characteristics of a tire in accordance with the example uniformity correction techniques according to aspects of the present disclosure.

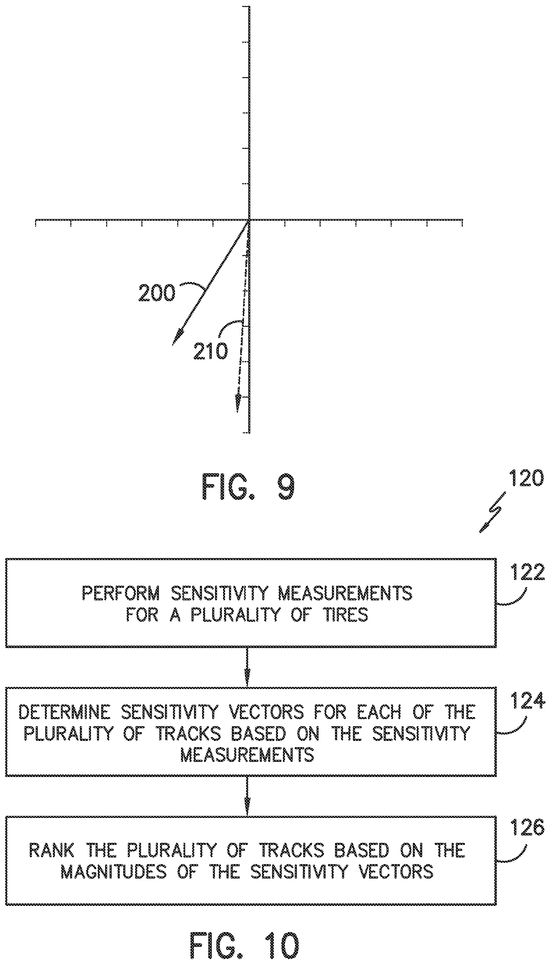

For example, FIG. 9 plots in polar coordinates vector representations of an example first harmonic of lateral force variation ("LFV1") for both clockwise and counterclockwise rotation of a tire that can be identified from uniformity testing of the tire. Vector 200 is associated with LFV1 for clockwise rotation of the tire. The vector 200 has a magnitude equal to the peak-to-peak amplitude of LFV1 for clockwise rotation and an azimuth equal to the angular difference between a reference point (e.g. a barcode) and the point of maximum lateral force variation contribution. Vector 210 is associated with LFV1 for counterclockwise rotation of the tire. The vector 210 has a magnitude equal to the peak-to-peak amplitude of LFV1 for counterclockwise rotation and an azimuth equal to the angular difference between a reference point and the point of maximum lateral force variation contribution. If the magnitude of either of vectors 200 or 210 exceeds a predefined threshold, uniformity correction techniques according to example aspects of the present disclosure can be used to correct for the LFV1 for both clockwise and counterclockwise rotation of the tire.

Referring back to FIG. 8 at (104), the method includes identifying a plurality of tracks along a bead of the tire for selective removal of tire material to reduce the magnitude of the identified uniformity parameter. As discussed above, the magnitude of selected uniformity parameters, including selected harmonics of uniformity parameters, can be reduced by selectively removing material along one or more tracks in the bead portion of the tire. At (104), the method can include identifying a plurality of tracks for selective removal of material along the bead portion of the tire, including at least one track in the high flange zone of the tire, at least one track in the low flange zone of the tire, and at least one track in the bead seat zone of the tire. FIG. 2 depicts the location of the high flange zone 59, the low flange zone 57, and the bead seat zone 56 along the bead of a tire 50.

Referring back to FIG. 8 at (106), the method includes determining an ablation order for the plurality of tracks along the bead of the tire. The ablation order defines the order in which ablation patterns are determined (i.e. calculated) for the plurality of tracks. According to particular aspects of the present disclosure, the ablation order ranks the tracks based on sensitivity associated with the tracks such that ablation patterns are calculated for more sensitive tracks before ablation patterns are calculated for less sensitive tracks.

FIG. 10 depicts an example analytical method (120) for determining an ablation order based on sensitivity data for the plurality of identified tracks according to an example embodiment of the present disclosure. At (122), the method includes performing sensitivity measurements for the plurality of tracks on a set of a plurality of tires. Sensitivity measurements can involve determining how much change in force will result from implementing an ablation pattern along a particular track to correct for a single specific parameter and harmonic at a set maximum depth of ablation. For example, an ablation pattern having a 1 mm maximum depth is ablated in accordance with a predefined ablation pattern (e.g. a sinusoid) to correct for LFV1, and a change in force based on this correction is determined. This change in force (in kg) corresponds to the sensitivity level in kg/mm.

Sensitivity measurements can be performed for each of the plurality of tracks across a set of multiple tires, such as five or more tires. These sensitivity measurements can be analyzed using various analytical techniques to acquire sensitivity data for each of the plurality of tracks. For instance, at (124) of FIG. 10, sensitivity vectors are determined for each of the plurality of tracks for the tire based on the sensitivity measurements. The sensitivity vectors represent the magnitude and azimuth of the uniformity effect of an ablation pattern having a specified maximum depth (e.g. 1 mm) on a particular uniformity parameter of a tire.

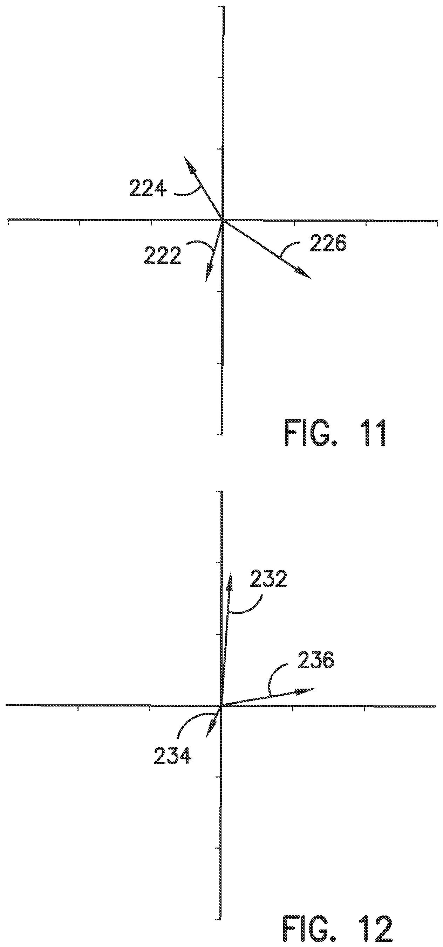

For example, FIG. 11 plots in polar coordinates sensitivity vectors associated with LFV1 for clockwise rotation of a tire for a plurality of tracks, including a sensitivity vector 222 for a high flange track, a sensitivity vector 224 for a low flange track, and sensitivity vector 226 for a bead seat track. FIG. 12 plots in polar coordinates sensitivity vectors associated with LFV1 for counterclockwise rotation of a tire for a plurality of tracks, including a sensitivity vector 232 for a high flange track, a sensitivity vector 234 for a low flange track, and sensitivity vector 236 for a bead seat track. Each of the vectors 222, 224, 226, 232, 234, and 236 have a magnitude equal to the peak-to-peak amplitude of the effect of an ablation pattern having an ablation depth of 1 mm on lateral force and an azimuth equal to the angular difference between a reference point and the point of maximum lateral force variation contribution. As depicted in FIGS. 11 and 12, the sensitivity vector 232 indicates that the high flange track is the most sensitive (e.g. has the greatest magnitude) with respect to lateral force variation of the tire. The vectors 226 and 236 indicate that the bead seat track is the next most sensitive track. The vectors 224 and 234 indicate that the low flange track is the least sensitive track.

At (126) of FIG. 10, the tracks are ranked based on the magnitudes of the sensitivity vectors. For instance, tracks with sensitivity vectors having the highest magnitudes can be provided at the beginning of the ablation order. Tracks with sensitivity vectors having the lowest magnitudes can be provided at the end of the ablation order. Referring to the example of FIGS. 11 and 12, the ablation order can include the following track order based magnitudes of the sensitivity vectors 222, 224, 226, 232, 234, and 236:

    (1) High Flange Track;
    (2) Bead Seat Track;

(3) Low Flange Track.

As will be described in detail below, this ablation order will define the order in which ablation patterns are progressively calculated for the tracks. By identifying the ablation order using analytical techniques, the numerical burden of calculating the ablation patterns for the plurality of tracks can be reduced, leading to faster computer processing times.

Referring back to FIG. 8 at (106), the method includes progressively determining, for instance with a computing device, one or more ablation patterns according to the ablation order to reduce the magnitude of the identified uniformity parameter. More particularly, the one or more ablation patterns can be progressively determined according to a progression scheme defined by the ablation order. The progression scheme can include a plurality of stages, with each stage corresponding to one of the plurality of identified tracks for ablation.

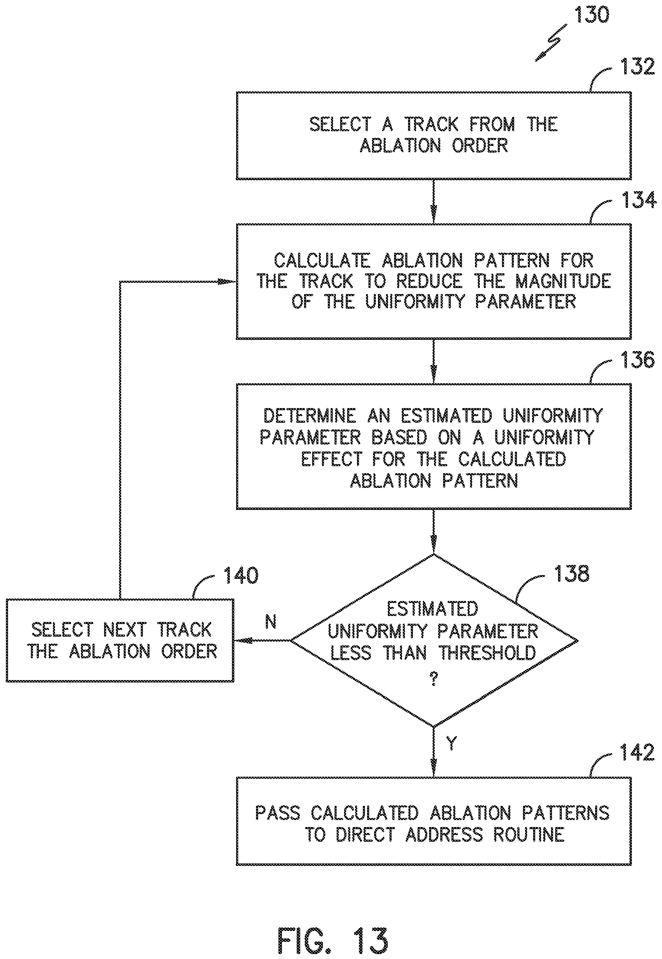

The progressive calculation of the ablation patterns according to the progression scheme can involve calculating a single ablation pattern for a single track at a time. In particular, for each stage in the progression scheme, an ablation pattern for a track selected from the ablation order can be calculated. After the ablation pattern for the single track has been calculated, the effect of the single ablation pattern can be used to estimate the remaining uniformity parameter resulting from the single ablation pattern. If the magnitude of the estimated uniformity parameter magnitude falls below a predetermined threshold, the method can exit the progression scheme. Otherwise, the method proceeds to the next stage of the progression scheme where this process is repeated until the estimated uniformity parameter magnitude falls below a threshold. An example method of progressively calculating one or more ablation patterns according to the ablation order will be discussed in detail with reference to FIG. 13 below.

At (110), the method can optionally include determining direct address commands for implementing the calculated ablation patterns. The direct address commands can specify operating parameters for discrete ablation segments at specific angular locations or addresses on the bead of the tire. Example techniques for determining direct address commands from one or more ablation patterns are disclosed in PCT/US11/66699 which is commonly assigned to the assignee of the present disclosure and which is incorporated by reference herein.

At (112) of FIG. 8, selective removal of tire material at the one or more specified tracks/areas is accomplished in accordance with the calculated ablation patterns. For instance, a laser ablation device can be rotated relative to a tire maintained in a fixed location to achieve ablation along one or more tracks of one or more beads of the tire. Laser ablation can be employed as a preferred removal technique because it is able to accomplish removal depths and areas with precise control. To the extent that other rubber removal techniques, such as but not limited to grinding, sandblasting, water jet removal and the like may be implemented to achieve the same precision levels as laser ablation, the present subject matter may also employ such alternative removal techniques.

Example Method for Progressively Determining One or More Ablation Patterns

FIG. 13 depicts a flow diagram of an example method (130) for progressively calculating one or more ablation patterns pursuant to a progression scheme defined by the ablation order according to an example embodiment of the present disclosure. At (132), a first track is selected from the ablation order. The first track can be associated with the first stage of the progression scheme. Preferably, the most sensitive track is selected from the ablation order as the first track. For instance, referring to the example ablation order determined from the sensitivity vectors of FIGS. 11 and 12, the high flange track can be selected as the first track for the first stage of the progression scheme.

At (134), a first ablation pattern can be calculated for the first track to reduce the magnitude of the identified uniformity parameter. The first ablation pattern can be calculated using any suitable technique. For example, if the identified uniformity parameter is a selected harmonic of lateral force variation, the first ablation pattern can be calculated using a non-linear solver as will be discussed in more detail below. The first ablation pattern will have a first uniformity effect on the uniformity parameter for the tire.

Once the ablation pattern for the first track has been calculated, an estimated uniformity parameter magnitude can be determined based on the first uniformity effect of the first ablation pattern (136). The estimated uniformity parameter magnitude provides an estimate or prediction of the remaining uniformity parameter magnitude for the tire after selectively removing material from the first track of the tire according to the first ablation pattern.

At (138), the estimated uniformity parameter magnitude can be compared to a predetermined threshold. The predetermined threshold can be set to any value as desired. Preferably, the predetermined threshold is set at or below a tolerance for the uniformity parameter for the tire. If the estimated uniformity parameter magnitude is below the threshold, the progression scheme can be terminated and the ablation pattern can pass the calculated ablation pattern to a direct address routine as shown at (142). Otherwise, further ablation patterns need to be calculated to correct for the uniformity parameter in the tire. In this case, the progression scheme proceeds to the next stage by selecting the next track specified in the ablation order (140).

More particularly, a second track can be selected from the ablation order for a second stage of the progression scheme. The second track can be less sensitive than the first track. For instance, referring to the example ablation order determined from the sensitivity vectors of FIGS. 11 and 12, the bead seat track can be selected as the second track for the second stage of the progression scheme.

After the second track has been selected, the process of calculating an ablation pattern (134) and determining an estimated uniformity parameter magnitude resulting from the ablation pattern (136) is repeated. In particular, a second ablation pattern can be calculated for the first track to reduce the magnitude of the identified uniformity parameter. The second ablation pattern can have a second uniformity effect on the uniformity parameter for the tire. The estimated uniformity parameter magnitude can be adjusted based on the second uniformity effect of the second ablation pattern to obtain a new estimated uniformity parameter magnitude. If the new estimated uniformity parameter magnitude is below the threshold, the progression scheme can be terminated and the ablation pattern can pass the first and second ablation patterns to a direct address routine as shown at (142). Otherwise, yet further ablation patterns need to be calculated to correct for the uniformity parameter in the tire.

Accordingly, the progression scheme can proceed to a third stage where the process of calculating an ablation pattern (134) and determining an estimated uniformity pattern (136) is again repeated for a third track specified in the ablation order. Ablation patterns can be progressively determined in this manner until the estimated uniformity parameter magnitude is reduced below the threshold or until ablation tracks are calculated for all tracks specified in the ablation order.

Example Calculation of an Ablation Pattern

One example technique for calculating an ablation pattern to correct for the first harmonic of lateral force variation ("LFV1") will now be discussed in detail. The example technique can calculate for ablation patterns to reduce LFV1 for both clockwise and counterclockwise rotation of the tire. While the present example will be discussed with reference to LFV1 for purposes of illustration and discussion, the techniques disclosed herein are suitable for other uniformity parameters, such as other selected harmonics of lateral force variation. Given complex lateral force variation sensitivities for a particular track for both clockwise and counterclockwise rotation of a tire, the following equations hold:

$$(1)\ A * Gain_{CW.re} - B * Gain_{CW.im} = Effect_{CW.re}$$

$$(2)\ A * Gain_{CW.im} + B * Gain_{CW.re} = Effect_{CW.im}$$

$$(3)\ A * Gain_{CCW.re} - B * Gain_{CCW.im} = Effect_{CCW.re}$$

$$(4)\ A * Gain_{CCW.im} + B * Gain_{CCW.re} = Effect_{CCW.im}$$

$Gain_{CW.re}$ is the real component (e.g. the x-component in a Cartesian representation) and $Gain_{CW.im}$ is the imaginary component (e.g. the y-component in a Cartesian representation) of the sensitivity vector for the track for LFV1 for clockwise rotation of the tire. $Gain_{CCW.re}$ is the real component and $Gain_{CCW.im}$ is the imaginary component of the sensitivity vector for the track for LFV1 for counterclockwise rotation of the tire. $Gain_{CW.re}$, $Gain_{CW.im}$, $Gain_{CCW.re}$, and $Gain_{CCW.im}$ can be analytically determined from sensitivity measurements for the track as discussed above.

$Effect_{CW.re}$ is the real component and $Effect_{CW.im}$ is the imaginary component of the uniformity effect vector representative of the uniformity effect on LFV1 for clockwise rotation resulting from the ablation pattern. $Effect_{CCW.re}$ is the real component and $Effect_{CCW.im}$ is the imaginary component of the uniformity effect vector representative of the uniformity effect on LFV1 for counterclockwise rotation resulting from the ablation pattern.

$A$ and $B$ are the real and imaginary coefficients associated with the ablation pattern. A vector representative with the ablation pattern can be determined from the coefficients $A$ and $B$ as follows:

$$MAG = 2\sqrt{A^2 + B^2}$$

$$AZI = \tan^{-1}\frac{B}{A}$$

MAG is the magnitude of the ablation pattern vector and AZI is the azimuth equal to the angular difference between a reference point and the point of maximum depth of the ablation pattern. The ablation pattern corresponding to this ablation pattern vector can be a sinusoid having a peak to peak amplitude equal to the magnitude of the vector with a peak occurring at the azimuth. In a particular implementation, the ablation pattern associated with parameters A and *B* can be offset by 180° for the other bead of the tire.

The ablation pattern can be calculated by solving for the coefficients *A* and *B*. In one embodiment, the coefficients *A* and *B* are not determined directly by choosing desired clockwise and counterclockwise uniformity effects $Effect_{CW.re}$, $Effect_{CW.im}$, $Effect_{CCW.re}$, and, $Effect_{CCW.im}$. Rather, the coefficients A and B are determined indirectly using a non-linear solver. The non-linear solver can calculate the coefficients *A* and *B,* and thus the ablation pattern, by minimizing a cost function. The cost function can be based on or can include a term associated with the estimated uniformity parameter magnitude, in this case LFV1, resulting from the ablation pattern such that the non-linear solver identifies the ablation pattern with the greatest effect on the uniformity parameter.

More particularly, the following equations provide for new estimated LFV1 for the tire by adding the effect of an ablation pattern to the existing LFV1 for the tire:

$$(5)\ New_{CW.re} = Orig_{CW.re} + Effect_{CW.re}$$

$$(6)\ New_{CW.im} = Orig_{CW.im} + Effect_{CW.im}$$

$$(7)\ New_{CCW.re} = Orig_{CCW.re} + Effect_{CCW.re}$$

$$(8)\ New_{CCW.im} = Orig_{CCW.im} + Effect_{CCW.im}$$

$New_{CW.re}$ is the real component and $New_{CW.im}$ is the imaginary component of the estimated uniformity parameter vector representative of the estimated LFV1 for clockwise rotation of the tire. $New_{CCW.re}$ is the real component and $New_{CCW.im}$ is the imaginary component of the estimated uniformity parameter vector representative of the estimated LFV1 for counterclockwise rotation of the tire.

$Orig_{CW.re}$ is the real component and $Orig_{CW.im}$ is the imaginary component of the vector representative of the original (i.e. before ablation of the track) LFV1 for clockwise rotation of the tire. $Orig_{CCW.re}$ is the real component and $Orig_{CCW.im}$ is the imaginary component of the vector representative of the original (i.e. before ablation of the track) LFV1 for counterclockwise rotation of the tire.

The magnitude of the vector representative of the estimated uniformity parameter vector representative of estimated LFV1 for clockwise rotation of the tire can be provided by:

$$(9)\ New_{CW.mag} = 2\sqrt{New_{CW.re}^{2} + New_{CW.im}^{2}}$$

Similarly, the magnitude of the vector representative of the estimated uniformity parameter vector representative of estimated LFV1 for counterclockwise rotation of the tire can be provided by:

$$(10)\ New_{CCW.mag} = 2\sqrt{New_{CCW.re}^{2} + New_{CCW.im}^{2}}$$

The estimated LFV1 for the tire can be determined to be the maximum of the magnitude of LFV1 for clockwise rotation and LFV1 for counterclockwise rotation as follows:

$$(11)\ New_{LFV1} = Max[\ New_{CW.mag}, New_{CCW.mag}]$$

The non-linear solver can solve for the coefficients *A* and *B* by minimizing a cost value including a term associated with $New_{LFV1}$. One example cost function is provided as follows:

$$(12)\ Cost = [New_{LFV1}/(Limit - \delta_1)]^{2}$$

where *Limit* is the predefined threshold for LFV1 and $\delta_1$ is an offset that is subtracted from the predefined threshold so that the minimum is below the predefined threshold. Other suitable cost functions can be used. The non-linear solver can solve for *A* and *B* by starting with random guesses and then proceeding by various approaches to find a minimum of the cost function. As demonstrated, calculating an ablation pattern for a single track at a time only requires determination of two parameters at a time. This is in contrast to a simultaneous approach which could require, for instance, determination of six parameters for three tracks. As a result, computer processing time for implementing the non-linear solver to calculate the ablation pattern can be reduced.

According to particular embodiments of the present disclosure, the non-linear solver can implement constraints in the calculating the ablation pattern. For example, the non-linear solver can implement ablation depth constraints such that the solution reached by the non-linear solver does not require ablation of more than a maximum allowed ablation depth. In one embodiment, the non-linear solver can implement the depth constraints by minimizing the following expression:

$$(13)\; Depth\; Constraint = [Depth/(Max\_Depth - \delta_2)]^2$$

where *Max_Depth* is the maximum allowed ablation depth, $Depth = \sqrt{A^2 + B^2}$, and $\delta_2$ is an offset that is subtracted from *Max_Depth* so that the ablation depth stays within the threshold. The non-linear solver can also implement the depth constraint as a term of the cost function.

An ablation pattern to correct for one or more harmonics of radial force variation (RFV) can be calculated in a similar manner. RFV for both counterclockwise and clockwise rotation of a tire are substantially similar such that the RFV for both counterclockwise and clockwise rotation of the tire can be considered to be the same. As a result, coefficients *A* and *B* for an ablation pattern to correct for one or more harmonics of radial force variation can be solved directly from the following equations:

$$(14)\; A * Gain_{RFV.re} - B * Gain_{RFV.im} = Effect_{RFV.re}$$

$$(15)\; A * Gain_{RFV.im} + B * Gain_{RFV.re} = Effect_{RFV.im}$$

$Gain_{RFV.re}$ is the real component and $Gain_{RFV.im}$ is the imaginary component of the sensitivity vector for the track for the selected harmonic of RFV. $Gain_{RFV.re}$, and $Gain_{RFV.im}$ can be analytically determined from sensitivity measurements for the track as discussed above. $Effect_{RFV.re}$ is the real component and $Effect_{RFV.im}$ is the imaginary component of the uniformity effect vector representative of the uniformity effect on the selected harmonic for RFV. $Effect_{RFV.re}$ and $Effect_{RFV.im}$ can be selected values associated with a uniformity effect vector selected to oppose the harmonic of RFV. Thus, coefficients *A* and *B* can be solved directly from equations (14) and (15) without requiring a non-linear solver. An ablation pattern can be determined from the coefficients *A* and *B* and it can be determined whether the ablation pattern satisfied ablation depth constraints. If not, the amplitude of the ablation pattern can be reduced so that it does fall within depth constraints. Additional ablation patterns can be determined for additional tracks to compensate for any additional correction needed for radial force variation.

Example Vector Representation of Correction of LFV1 Using Progressive Determination of Ablation Patterns

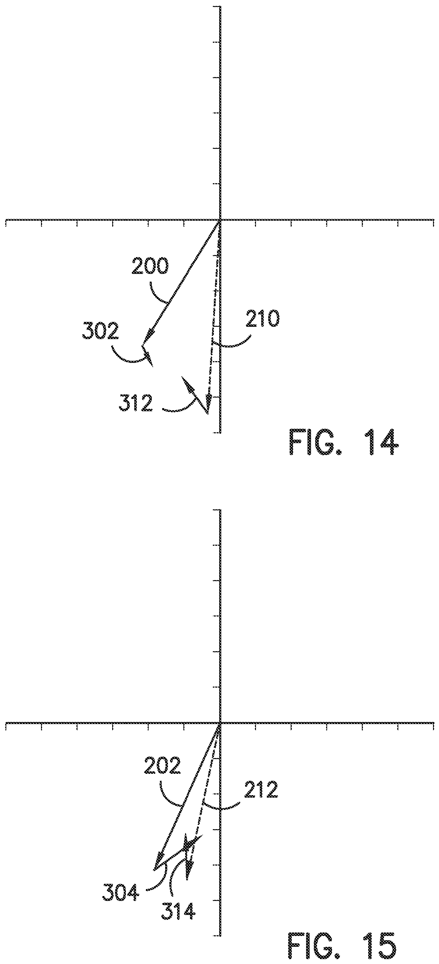

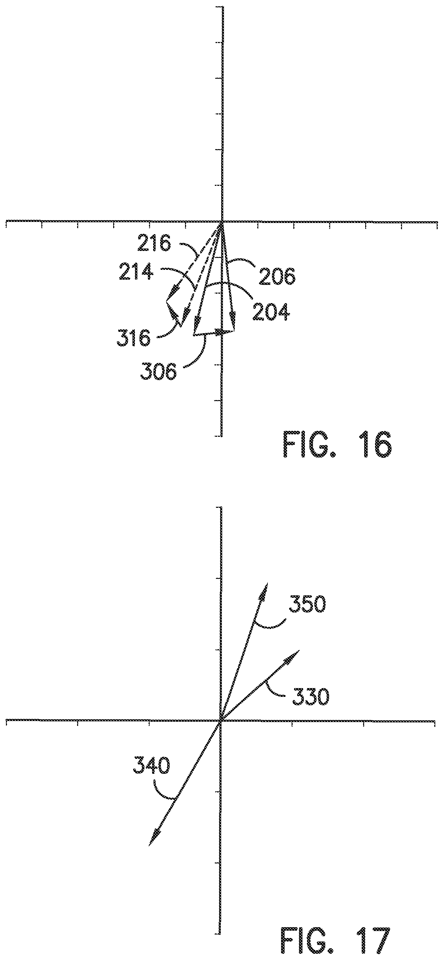

To illustrate the progressive determination of ablation patterns according to an ablation order, an example vector representation will now be set forth. The example discussed with reference to FIGS. 14-16 will be discussed with reference to correcting LFV1 for the tire, such as the LFV1 represented by the vectors 200 and 210 in FIG. 9. FIGS. 14-16 vectors in polar coordinates representative of LFV1 for both clockwise and counterclockwise rotation at various stages of the progression scheme. FIG. 17 plots in polar coordinates vector representations of ablation patterns determined for a plurality of tracks, including ablation patterns for a high flange zone track, a low flange zone track, and a bead seat track.

The ablation order can be based on the sensitivity data, such as the sensitivity vectors depicted in FIGS. 11 and 12. Based on the magnitude of these sensitivity vectors, the ablation order can be:

(1) High Flange Track;
(2) Bead Seat Track;
(3) Low Flange Track.

Referring now to FIG. 14, vector 200 is representative of the original LFV1 for clockwise rotation of the tire. Vector 210 is representative of the original LFV1 associated with counterclockwise rotation of the tire. To reduce the magnitude of the vectors 200 and 210, a first ablation pattern can be calculated for the first track in the ablation order. The first track in this example is the high flange track. A vector 330 representative of the first ablation pattern for the high flange track is depicted in FIG. 17. The vector 330 has a magnitude representative of the peak to peak amplitude of the ablation pattern and an azimuth equal to the angular difference between a reference point and the point of maximum depth of the ablation pattern.

Referring back to FIG. 14, the first ablation pattern can have a first uniformity effect on LFV1 for both clockwise and counterclockwise rotation of the tire. This uniformity effect can be represented by vectors 302 and 312. In particular, vector 302 is representative of the first uniformity effect of the first ablation pattern on LFV1 for clockwise rotation. Vector 312 is representative of the first uniformity effect of the first ablation pattern on LFV1 for counterclockwise rotation. Pursuant to the progression scheme, an estimated LFV1 for both clockwise and counterclockwise rotation can be determined from the first uniformity effect of the first ablation pattern.

FIG. 15 depicts vector 202 representative of the estimated LFV1 for clockwise rotation of the tire resulting from the first ablation pattern. Vector 202 can be determined as a vector sum of vectors 200 and 302 of FIG. 14. Referring back to FIG. 15, vector 212 is representative of the estimated LFV1 for counterclockwise rotation of the tire resulting from the first ablation pattern. Vector 212 can be determined as a vector sum of vectors 210 and 312 of FIG. 14. If the magnitudes of the vectors 202 and 212 shown in FIG. 15 are not below a predetermined threshold, then further ablation patterns for different tracks need to be calculated to correct for LFV1 for the tire.

In particular, a second ablation pattern can be calculated for the second track in the ablation order to reduce the magnitude of the vectors 202 and 212. In this example the second track is the bead seat track. A vector 350 representative of the second ablation pattern for the bead seat track is depicted in FIG. 17. The vector 350 has a magnitude representative of the peak to peak amplitude of the ablation pattern and an azimuth equal to the angular difference between a reference point and the point of maximum depth of the ablation pattern.

Referring back to FIG. 15, the second ablation pattern can have a second uniformity effect on LFV1 for both clockwise and counterclockwise rotation of the tire. This uniformity effect can be represented by vectors 304 and 314. In particular, vector 304 is representative of the second uniformity effect of the second ablation pattern on LFV1 for clockwise rotation. Vector 314 is representative of the second uniformity effect of the second ablation pattern on LFV1 for counterclockwise rotation. Pursuant to the progression scheme, the estimated LFV1 for both clockwise and counterclockwise rotation can be adjusted based on the second uniformity effect of the second ablation pattern.

FIG. 16 depicts a vector 204 representative of the adjusted estimated LFV1 for clockwise rotation of the tire resulting from the second ablation pattern. Vector 202 can be determined as a vector sum of vectors 202 and 304 of FIG. 15. Referring back to FIG. 16, vector 214 is representative of the adjusted estimated LFV1 for counterclockwise rotation of the tire resulting from the second ablation pattern. Vector 214 can be determined as a vector sum of vectors 212 and 314 of FIG. 14. If the magnitudes of the vectors 204 and 214 shown in FIG. 16 are not below a predetermined threshold, then yet further ablation patterns for different tracks need to be calculated to correct for LFV1 for the tire.

In particular, a third ablation pattern can be calculated for the third track in the ablation order, in this example the low flange track, to reduce the magnitude of the vectors 204 and 214. A vector 340 representative of the third ablation pattern for the bead seat track is depicted in FIG. 17. The vector 340 has a magnitude representative of the peak to peak amplitude of the ablation pattern and an azimuth equal to the angular difference between a reference point and the point of maximum depth of the ablation pattern.

Referring back to FIG. 16, the third ablation pattern can have a third uniformity effect on LFV1 for both clockwise and counterclockwise rotation of the tire. This uniformity effect can be represented by vectors 306 and 316. In particular, vector 306 is representative of the third uniformity effect of the third ablation pattern on LFV1 for clockwise rotation. Vector 316 is representative of the second uniformity effect of the second ablation pattern on LFV1 for counterclockwise rotation. Pursuant to the progression scheme, the estimated LFV1 for both clockwise and counterclockwise rotation can be further adjusted based on the third uniformity effect of the third ablation pattern.

FIG. 16 depicts a vector 206 representative of the adjusted estimated LFV1 for clockwise rotation of the tire resulting from the third ablation pattern. Vector 206 can be determined as a vector sum of vectors 204 and 306. Vector 216 is representative of the adjusted estimated LFV1 for counterclockwise rotation of the tire resulting from the third ablation pattern. Vector 216 can be determined as a vector sum of vectors 214 and 316. If the magnitudes of the vectors 206 and 216 fall below a predetermined threshold, there is no need to determine further ablation patterns to correct for the uniformity parameter of the tire. Tire material can then be selectively removed from the tracks along the bead of the tire in accordance with the calculated ablation patterns.

Simulation Results

To better appreciate the advantages of progressively determining ablation patterns according to the disclosed embodiments of the present disclosure, the results of an example application of the disclosed techniques will now be presented. Simulations were performed for a population of 10,000 tires having a particular tire construction and having known LFV1 parameters as set forth in Table 1 below:

Table 1

| Parameter | Mean | Standard Deviation |
|---|---|---|
| $LFV_{CW}$ | 3.091438 | 1.172149 |
| $LFV_{CCW}$ | 3.477883 | 1.078112 |
| Theta | 104.4491 | 35.51078 |

$LFV_{CW}$ is LFV1 for clockwise rotation of the tire. $LFV_{CCW}$ is LFV1 for counterclockwise rotation of the tire. Theta is the difference in azimuth associated with maximum lateral force contribution for $LFV_{CW}$ and $LFV_{CCW}$.

An ablation order for three tracks-one in the high flange zone, one in the lower flange zone, and one in the bead seat zone-was determined using known sensitivities for the particular tire construction. Simulations were performed to determine rates of success for correcting LFV1, calculation times for determining ablation patterns, and total ablation per tire, for three different approaches, namely, (1) a progressive approach, (2) an optimization approach, and (3) an analytical approach.

The progressive approach determined one or more ablation patterns to correct for LFV1 for both clockwise and counterclockwise rotation of the tire using the example progressive calculation of ablation patterns according to example aspects of the present disclosure. The optimization approach determined ablation patterns to correct for LFV1 for both clockwise and counterclockwise rotation of the tire by determining the ablation pattern for each track at the same time. The analytical approach determined ablation patterns to correct for LFV1 in only one of the clockwise or counterclockwise direction, whichever is greater. The analytical approach used an approach similar to the calculation of ablation patterns disclosed in U.S. Patent Application Publication No. 2012/0095587, which is commonly assigned to the assignee of the present disclosure and which is incorporated by reference herein for all purposes.

Table 1 below depicts example simulation results for calculating an ablation pattern for the high flange track to correct for LVH1 for only one of clockwise or counterclockwise rotation of the tire using the analytical approach.

Table 1

| Tire | LVD Mag Initial | LVI Mag Initial | LVH1 Initial | HF Burn Mag | HF Burn Azi | LVD Mag Final | LVI Mag Final | LVH1 Final |
|---|---|---|---|---|---|---|---|---|
| 1 | 10.9 | 8.4 | 10.9 | 0.5 | -1.3 | 7.2 | 10.1 | 10.1 |
| 2 | 11.8 | 10.5 | 11.8 | 0.5 | 88.8 | 8.0 | 11.9 | 11.9 |
| 3 | 12.9 | 10.1 | 12.9 | 0.5 | 17.6 | 9.1 | 11.6 | 11.6 |
| 4 | 12.5 | 12.3 | 12.5 | 0.5 | 91.6 | 8.7 | 13.9 | 13.9 |
| 5 | 12.5 | 6.6 | 12.5 | 0.5 | -231.9 | 8.8 | 7.7 | 8.8 |
| 6 | 12.8 | 11.5 | 12.8 | 0.5 | 82.3 | 9.0 | 12.9 | 12.9 |
| 7 | 8.5 | 11.6 | 11.6 | 0.5 | -104.5 | 12.1 | 9.8 | 12.1 |
| 8 | 13.1 | 9.4 | 13.1 | 0.5 | 60.5 | 9.3 | 10.9 | 10.9 |

LVD Mag Initial refers to the initial LVH1 in the clockwise direction. LVI Mag Initial refers to the initial LVH1 in the counterclockwise direction. LVH1 Initial refers to the greater of LVD Mag Initial and LVI Mag Initial for the tire. HF Burn Mag provides the maximum ablation depth of the calculated ablation pattern. HF Burn Azi provides the azimuthal location of the maximum ablation depth of the calculated ablation pattern. LVD Mag Final refers to the estimated LVH1 in the clockwise direction after ablation according to the calculated ablation pattern. LVI Mag Final refers to the estimated LVH1 in the counterclockwise direction after ablation according to the ablation pattern. LVH1 Final refers to the greater of LVD Mag Final and LVI Mag Final.

Table 2 below depicts example simulation results for calculating an ablation pattern for the high flange track to correct for LVH1 for both clockwise and counterclockwise rotation of the tire using the progressive approach according to example aspects of the present disclosure.

Table 2

| Tire | LVD Mag Initial | LVI Mag Initial | LVH1 Initial | HF Burn Mag | HF Burn Azi | LVD Mag Final | LVI Mag Final | LVH1 Final |
|------|------|------|------|------|------|------|------|------|
| 1 | 10.9 | 8.4 | 10.9 | 0.4 | 42.3 | 9.1 | 9.1 | 9.1 |
| 2 | 11.8 | 10.5 | 11.8 | 0.5 | 146.6 | 10.3 | 10.3 | 10.3 |
| 3 | 12.9 | 10.1 | 12.9 | 0.5 | 61.1 | 10.5 | 10.5 | 10.5 |
| 4 | 12.5 | 12.3 | 12.5 | 0.5 | 164.6 | 11.9 | 11.9 | 11.9 |
| 5 | 12.5 | 6.6 | 12.5 | 0.5 | 128.1 | 8.8 | 7.7 | 8.8 |
| 6 | 12.8 | 11.5 | 12.8 | 0.5 | 24.2 | 11.3 | 11.4 | 11.3 |
| 7 | 8.5 | 11.6 | 11.6 | 0.4 | 214.7 | 10.5 | 10.5 | 10.5 |
| 8 | 13.1 | 9.4 | 13.1 | 0.5 | 94.8 | 10.2 | 10.2 | 10.2 |

As demonstrated by Tables 1 and 2, the progressive ablation approach can provide for correction of LVH1 for both clockwise and counterclockwise rotations of the tire. The progressive approach also achieved improved reduction in LVH1 Final.

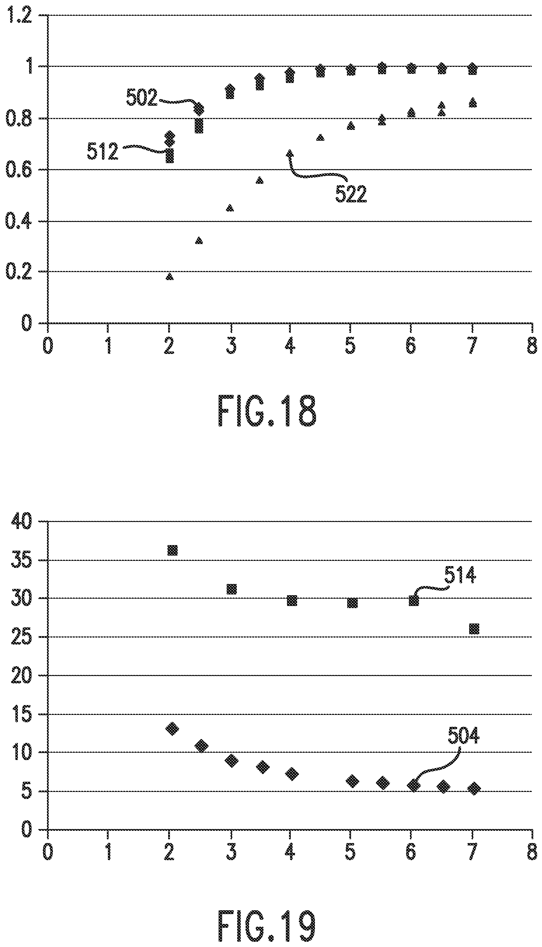

FIG. 18 depicts simulation results plotting correction recovery rate as a function LFV1 limit (i.e. the predetermined threshold for LFV1). FIG. 18 plots LFV1 limit (in kilograms) along the abscissa and recovery rate (as a fraction of population) along the ordinate. Diamond data points 502 are associated with the progressive approach. Square data points 512 are associated with the optimization approach. Triangle data points 522 are associated with the analytical approach. As demonstrated in FIG. 18, increased recovery rates were obtained using the progressive approach relative to the optimization approach and the analytical approach.

FIG. 19 depicts simulation results plotting calculation time as a function of LFV1 limit. FIG. 19 plots LFV1 limit (in kilograms) along the abscissa and calculation time (in seconds) along the ordinate. Diamond data points 504 are associated with the progressive approach. Square data points 514 are associated with an optimization approach. As demonstrated in FIG. 19, the calculation time for the progressive approach can be reduced relative to the calculation times associated with the optimization approach.

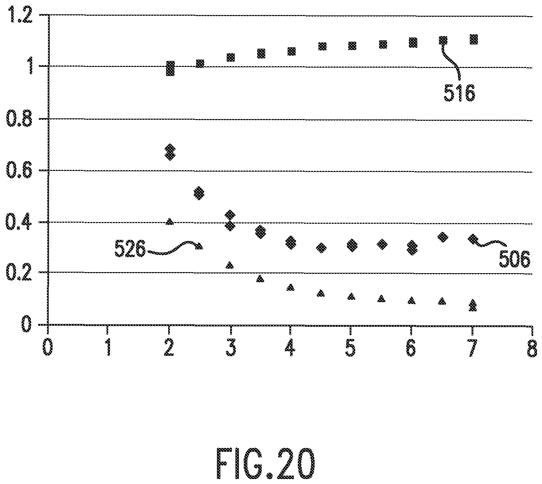

FIG. 20 depicts simulation results plotting total ablation as a function of LFV1 limit. FIG. 20 plots LFV1 limit (in kilograms) along the abscissa and total ablation (in millimeters) along the ordinate. Diamond data points 506 are associated with the progressive approach. Square data points 516 are associated with the optimization approach. Triangle data points 526 are associated with the analytical approach. As demonstrated in FIG. 20, the total ablation for the progressive approach was reduced compared to the optimization approach.

**Claims**

1. A method for reducing the magnitude of a uniformity parameter in a cured tire (40, 400), comprising:

   determining an ablation order for a plurality of tracks along a bead (42) of a tire (40, 400) based on sensitivity data so that the most sensitive tracks are calculated first for the plurality of tracks, the ablation order specifying the order in which ablation patterns for the plurality of tracks are to be calculated;
   progressively determining, with a computing device, one or more ablation patterns according to the ablation order to reduce the magnitude of the uniformity parameter for the tire (40, 400); and
   selectively removing material from the bead (42) of the tire (40, 400) in accordance with the one or more ablation patterns.

2. The method of claim 1, wherein the one or more ablation patterns are progressively determined according to a progression scheme defined by the ablation order, the progression scheme having one or more stages, each stage of the progression scheme being associated with one of the plurality of tracks specified by the ablation order.

3. The method of claim 2, wherein for each of the one or more stages of the progression scheme, the method comprises:

   determining an ablation pattern to reduce the magnitude of the uniformity parameter; and

determining an estimated uniformity parameter magnitude resulting from the ablation pattern.

4. The method of claim 3, wherein the one or more ablation patterns are progressively determined according to the progression scheme until the estimated uniformity parameter magnitude falls below a predetermined threshold.

5. The method of claim 1, wherein the plurality of tracks comprises at least one track in an upper flange zone of the bead (42), at least one track in the lower flange zone of the bead (42), and at least one track in the bead (42) seat zone of the bead (42).

6. The method of claim 1, wherein determining an ablation order for the plurality of tracks comprises:

   identifying a sensitivity vector for each of the plurality of tracks; and
   ranking the plurality of tracks based on the magnitude of the sensitivity vector for each of the plurality of tracks.

7. The method of claim 6, wherein the sensitivity vector is determined from sensitivity measurements performed on a plurality of tires (40, 400).

8. The method of claim 1, wherein progressively determining one or more ablation patterns according to the ablation order comprises:

   selecting a first track from the ablation order;
   determining a first ablation pattern for the first track to reduce the magnitude of the uniformity parameter for the tire (40, 400), the first ablation pattern having a first uniformity effect on the uniformity parameter for the tire (40, 400);
   determining an estimated uniformity parameter magnitude based on the first uniformity effect of the first ablation pattern;
   selecting a second track from the ablation order; and
   determining a second ablation pattern for the second track to reduce the estimated uniformity parameter magnitude, the second ablation pattern having a second uniformity effect on the uniformity parameter for the tire (40, 400).

9. The method of claim 1, wherein the uniformity parameter comprises at least one harmonic of lateral force variation of the tire (40, 400).

10. The method of claim 9, wherein the one or more ablation patterns are calculated to correct for the at least one harmonic of lateral force variation for both clockwise and counterclockwise rotation of the tire (40, 400).

11. The method of claim 9, wherein each of the one or more ablation patterns is calculated using a non-linear solver, the non-linear solver calculating the ablation pattern by minimizing a cost function, the cost function having at least one term associated with at least one estimated harmonic of lateral force variation resulting from the calculated ablation pattern.

12. The method of claim 11, wherein the non-linear solver implements an ablation depth constraint in calculating the ablation pattern.

13. The method of claim 1, wherein selectively removing material from the bead (42) of the tire (40, 400) in accordance with the one or more ablation patterns comprises selectively removing material from the tire (40, 400) using an ablation device configured to rotate around the tire (40, 400) while the tire (40, 400) is maintained in a fixed position.

14. The method of claim 1, wherein the uniformity parameter comprises one or more of low and high speed radial force variation, tangential force variation, radial run out, lateral run out, mass variance, conicity, and ply steer.

15. A uniformity correction system for reducing the magnitude of a uniformity parameter in a cured tire (40, 400), the system comprising:

   a tire (40, 400) fixture on which a tire (40, 400) is configured to be securely mounted;
   an ablation device configured to provide ablation of a tire (40, 400) mounted on said tire (40, 400) fixture, said ablation device configured to rotate about the tire (40, 400) during ablation of the tire (40, 400); and

a computer control system coupled to said ablation device and said tire (40, 400) fixture, said computer control system configured to determine an ablation order for a plurality of tracks along a bead (42) of the tire (40, 400) based on sensitivity data so that the most sensitive tracks are calculated first for the plurality of tracks, the ablation order specifying the order in which ablation patterns for the plurality of tracks are to be calculated, the computer control system configured to progressively determine one or more ablation patterns according to the ablation order to reduce the magnitude of the uniformity parameter for the tire (40, 400), said computer control system further configured to selectively control the ablation device such that tire (40, 400) material is selectively removed from at least one bead (42) of the tire (40, 400) in accordance with the one or more plurality of ablation patterns.

**Patentansprüche**

1. Verfahren zum Reduzieren der Größe eines Gleichförmigkeitsparameters in einem vulkanisierten Reifen (40, 400), umfassend:

   Bestimmen einer Abtragungsordnung für eine Vielzahl von Spuren entlang einer Wulst (42) eines Reifens (40, 400) aufgrund von Sensitivitätsdaten, sodass die empfindlichsten Spuren zuerst für die Vielzahl von Spuren berechnet werden, wobei die Abtragungsordnung die Ordnung festlegt, in der Abtragungsmuster für die Vielzahl von Spuren berechnet werden sollen;
   mit einer Berechnungsvorrichtung, fortschreitendes Bestimmen von einem oder mehr Mustern entsprechend der Abtragungsordnung, um die Größe des Gleichförmigkeitsparameters für den Reifen (40, 400) zu reduzieren; und
   selektives Entfernen von Material aus der Wulst (42) des Reifens (40, 400) gemäß dem einen oder mehr Abtragungsmustern.

2. Verfahren nach Anspruch 1, wobei das eine oder mehr Abtragungsmuster gemäß einem Progressionsschema, das durch die Abtragungsordnung definiert wird, fortschreitend bestimmt werden, wobei das Progressionsschema eine oder mehr Stufen hat, wobei jede Progressionsstufe mit einer der Vielzahl von Spuren verbunden ist, die durch die Abtragungsordnung festgelegt sind.

3. Verfahren nach Anspruch 2, wobei für jede der einen oder mehr Stufen des Progressionsschemas das Verfahren umfasst:

   Bestimmen eines Abtragungsmusters zum Reduzieren der Größe des Gleichförmigkeitsparameters; und
   Bestimmen einer abgeschätzten Größe des Gleichförmigkeitsparameters, die sich aus dem Abtragungsmuster ergibt.

4. Verfahren nach Anspruch 3, wobei das eine oder mehr Abtragungsmuster fortschreitend gemäß dem Progressionsschema bestimmt werden, bis die abgeschätzte Größe des Gleichförmigkeitsparameters unter einen vorbestimmten Schwellwert fällt.

5. Verfahren nach Anspruch 1, wobei die Vielzahl von Spuren mindestens eine Spur in einer oberen Flanschzone der Wulst (42), mindestens eine Spur in der unteren Flanschzone der Wulst (42) und mindestens eine Spur im Bereich des Sitzes des Wulst (42) der Wulst (42) umfasst.

6. Verfahren nach Anspruch 1, wobei das Bestimmen einer Abtragungsordnung für die Vielzahl von Spuren umfasst:

   Identifizieren eines Sensitivitätsvektors für jede der Vielzahl von Spuren; und
   Klassifizieren der Vielzahl von Spuren aufgrund der Größe des Sensitivitätsvektors für jede der Vielzahl von Spuren.

7. Verfahren nach Anspruch 6, wobei der Sensitivitätsvektor aus Sensitivitätsmessungen bestimmt wird, die an einer Vielzahl von Reifen (40, 400) ausgeführt werden.

8. Verfahren nach Anspruch 1, wobei das fortschreitende Bestimmen von einem oder mehr Abtragungsmustern gemäß der Abtragungsordnung umfasst:

Auswählen einer ersten Spur aus der Abtragungsordnung;

Bestimmen eines ersten Abtragungsmusters für die erste Spur, um die Größe des Gleichförmigkeitsparameters für den Reifen (40, 400) zu reduzieren, wobei das erste Abtragungsmuster einen ersten Gleichförmigkeitseffekt auf den Gleichförmigkeitsparameter für den Reifen (40, 400) hat;

Bestimmen einer abgeschätzten Größe des Gleichförmigkeitsparameters auf der Basis des ersten Gleichförmigkeitseffekts des ersten Abtragungsmusters;

Auswählen einer zweiten Spur aus der Abtragungsordnung; und

Bestimmen eines zweiten Abtragungsmusters für die zweite Spur, um die abgeschätzte Größe des Gleichförmigkeitsparameters zu reduzieren, wobei das zweite Abtragungsmuster einen zweiten Gleichförmigkeitseffekt auf den Gleichförmigkeitsparameter für den Reifen (40, 400) hat.

9. Verfahren nach Anspruch 1, wobei der Gleichförmigkeitsparameter mindestens eine Harmonische der lateralen Kraftvariation des Reifens (40, 400) umfasst.

10. Verfahren nach Anspruch 9, wobei das eine oder mehr Abtragungsmuster berechnet werden, um die mindestens eine Harmonische der lateralen Kraftvariation für die Drehung des Reifens (40, 400) sowohl im Uhrzeigersinn als auch gegen den Uhrzeigersinn zu korrigieren.

11. Verfahren nach Anspruch 9, wobei jedes des einen oder der mehr Abtragungsmuster unter Verwendung eines nichtlinearen Gleichungslösers berechnet wird, wobei der nichtlineare Gleichungslöser das Abtragungsmuster durch Minimieren einer Kostenfunktion berechnet, wobei die Kostenfunktion mindestens einen Term hat, der mit mindestens einer abgeschätzten Harmonischen der lateralen Kraftvariation verbunden ist, die aus dem berechneten Abtragungsmuster resultiert.

12. Verfahren nach Anspruch 11, wobei der nichtlineare Gleichungslöser eine Bedingung für die Abtragungstiefe bei der Berechnung des Abtragungsmusters implementiert.

13. Verfahren nach Anspruch 1, wobei das selektive Entfernen von Material von der Wulst (42) des Reifens (40, 400) gemäß dem einen oder mehr Abtragungsmustern das selektive Entfernen von Material vom Reifen (40, 400) unter Verwendung einer Abtragungsvorrichtung umfasst, die dafür ausgelegt ist, um den Reifen (40, 400) zu rotieren, während der Reifen (40, 400) in einer festen Position gehalten wird.

14. Verfahren nach Anspruch 1, wobei der Gleichförmigkeitsparameter ein oder mehr Elemente aus niedriger und hoher Drehzahl-Radialkraftvariation, Tangentialkraftvariation, radialem Unrundlauf, lateralem Unrundlauf, Massenvarianz, Konizität und Lagensteuerung umfasst.

15. Gleichförmigkeitskorrektursystem zum Reduzieren der Größe eines Gleichförmigkeitsparameters in einem vulkanisierten Reifen (40, 400), wobei das System umfasst:

eine Reifen (40, 400)-Halterung, auf der ein Reifen (40, 400) so ausgelegt ist, dass er sicher gehalten wird;

eine Abtragungsvorrichtung, die dafür ausgelegt ist, für die Abtragung eines Reifens (40, 400) zu sorgen, der auf der Reifen (40, 400)-Halterung montiert ist, wobei die Abtragungsvorrichtung dafür ausgelegt ist, um den Reifen (40, 400) während der Abtragung des Reifens (40, 400) zu rotieren; und

ein Computerkontrollsystem, das an die Abtragungsvorrichtung und die Reifen(40, 400)-Halterung angeschlossen ist, wobei das Computerkontrollsystem dafür ausgelegt ist, eine Abtragungsordnung für eine Vielzahl von Spuren entlang des Wulstes (42) des Reifens (40, 400) auf der Basis von Sensitivitätsdaten zu bestimmen, sodass die empfindlichsten Spuren zuerst für die Vielzahl von Spuren berechnet werden, wobei die Abtragungsordnung die Reihenfolge festlegt, in der die Abtragungsmuster für die Vielzahl von Spuren berechnet werden sollen, das Computerkontrollsystem ist dabei dafür ausgelegt, fortschreitend ein oder mehr Abtragungsmuster gemäß der Abtragungsordnung zu bestimmen, um die Größe des Gleichförmigkeitsparameters für den Reifen (40, 400) zu reduzieren, wobei das Computerkontrollsystem ferner dafür ausgelegt ist, selektiv die Abtragungsvorrichtung derart zu steuern, dass das Reifen (40, 400)-Material selektiv von mindestens einer Wulst (42) des Reifens (40, 400) gemäß des einen oder mehr der Vielzahl von Abtragungsmustern entfernt wird.

**Revendications**

1. Procédé de réduction de l'amplitude d'un paramètre d'uniformité dans un pneumatique durci (40, 400), comprenant :

de déterminer un ordre d'ablation pour une pluralité de pistes le long d'un talon (42) d'un pneumatique (40, 400) en fonction de données de sensibilité de telle manière que les pistes les plus sensibles sont calculées d'abord pour la pluralité de pistes, l'ordre d'ablation spécifiant l'ordre dans lequel des motifs d'ablation pour la pluralité de pistes doivent être calculés ;

de déterminer progressivement, avec un dispositif de calcul, un ou plusieurs motifs d'ablation selon l'ordre d'ablation pour réduire l'amplitude du paramètre d'uniformité pour le pneumatique (40, 400) ; et

d'enlever sélectivement du matériau depuis le talon (42) du pneumatique (40, 400) selon les un ou plusieurs motifs d'ablation.

2. Procédé selon la revendication 1, dans lequel les un ou plusieurs motifs d'ablation sont déterminés progressivement selon une schéma de progression défini par l'ordre d'ablation, le schéma de progression comportant une ou plusieurs étapes, chaque étape du schéma de progression étant associée à l'une de la pluralité de pistes spécifiées par l'ordre d'ablation.

3. Procédé selon la revendication 2, dans lequel pour chacune des une ou plusieurs étapes du schéma de progression, le procédé comprend :

de déterminer un motif d'ablation pour réduire l'amplitude du paramètre d'uniformité ; et
de déterminer une amplitude de paramètre d'uniformité estimée résultant du motif d'ablation.

4. Procédé selon la revendication 3, dans lequel les un ou plusieurs motifs d'ablation sont déterminés progressivement selon le schéma de progression jusqu'à ce que l'amplitude de paramètre d'uniformité estimée tombe sous un seuil prédéterminé.

5. Procédé selon la revendication 1, dans lequel la pluralité de pistes comprend au moins une piste dans une zone de flanc supérieur du talon (42), au moins une piste dans la zone de flanc inférieur du talon (42), et au moins une piste dans la zone de siège de talon (42) du talon (42).

6. Procédé selon la revendication 1, dans lequel déterminer un ordre d'ablation pour la pluralité de pistes comprend :

d'identifier un vecteur de sensibilité pour chacune de la pluralité de pistes ; et
de classer la pluralité de pistes en fonction de l'amplitude du vecteur de sensibilité pour chacune de la pluralité de pistes.

7. Procédé selon la revendication 6, dans lequel le vecteur de sensibilité est déterminé à partir de mesures de sensibilité réalisées sur une pluralité de pneumatiques (40, 400).

8. Procédé selon la revendication 1, dans lequel déterminer progressivement un ou plusieurs motifs d'ablation selon l'ordre d'ablation comprend :

de sélectionner une première piste à partir de l'ordre d'ablation ;
de déterminer un premier motif d'ablation pour la première piste pour réduire l'amplitude du paramètre d'uniformité pour le pneumatique (40, 400), le premier motif d'ablation ayant un premier effet d'uniformité sur le paramètre d'uniformité pour le pneumatique (40, 400) ;
de déterminer une amplitude de paramètre d'uniformité estimée en fonction du premier effet d'uniformité du premier motif d'ablation ;
de sélectionner une seconde piste à partir de l'ordre d'ablation ; et
de déterminer un second motif d'ablation pour la seconde piste pour réduire l'amplitude de paramètre d'uniformité estimée, le second motif d'ablation ayant un second effet d'uniformité sur le paramètre d'uniformité pour le pneumatique (40, 400).

9. Procédé selon la revendication 1, dans lequel le paramètre d'uniformité comprend au moins une harmonique d'une variation de force latérale du pneumatique (40, 400).

10. Procédé selon la revendication 9, dans lequel les un ou plusieurs motifs d'ablation sont calculés pour corriger l'au moins une harmonique de variation de force latérale pour à la fois la rotation dans le sens des aiguilles d'une montre et dans le sens inverse des aiguilles d'une montre du pneumatique (40, 400).

**11.** Procédé selon la revendication 9, dans lequel chacun des un ou plusieurs motifs d'ablation est calculé en utilisant un solveur non linéaire, le solveur non linéaire calculant le motif d'ablation en minimisant une fonction de coût, la fonction de coût ayant au moins un terme associé à au moins une harmonique estimée de variation de force latérale résultant du motif d'ablation calculé.

**12.** Procédé selon la revendication 11, dans lequel le solveur non linéaire met en oeuvre une contrainte de profondeur d'ablation lors du calcul du motif d'ablation.

**13.** Procédé selon la revendication 1, dans lequel enlever sélectivement du matériau du talon (42) du pneumatique (40, 400) selon les un ou plusieurs motifs d'ablation comprend d'enlever sélectivement du matériau du pneumatique (40, 400) en utilisant un dispositif d'ablation configuré pour tourner autour du pneumatique (40, 400) quand le pneumatique (40, 400) est maintenu dans une position fixe.

**14.** Procédé selon la revendication 1, dans lequel le paramètre d'uniformité comprend un ou plusieurs d'une variation de force radiale à haute et basse vitesse, une variation de force tangentielle, une excentricité latérale, une variance de masse, une conicité et un plysteer.

**15.** Système de correction d'uniformité pour réduire l'amplitude d'un paramètre d'uniformité dans une pneumatique durci (40, 400), le système comprenant :

un montage de pneumatique (40, 400) sur lequel un pneumatique (40, 400) est configuré pour être monté fixement ;
un dispositif d'ablation configuré pour permettre l'ablation d'un pneumatique (40, 400) monté sur ledit montage de pneumatique (40, 400), ledit dispositif d'ablation configuré pour tourner autour du pneumatique (40, 400) pendant l'ablation du pneumatique (40, 400) ; et
un système de commande informatique couplé audit dispositif d'ablation et audit montage de pneumatique (40, 400), ledit système de commande informatique configuré pour déterminer un ordre d'ablation pour une pluralité de pistes le long d'un talon (42) du pneumatique (40, 400) en fonction de données de sensibilité de telle manière que les pistes les plus sensibles sont calculées d'abord pour la pluralité de pistes, l'ordre d'ablation spécifiant l'ordre dans lequel des motifs d'ablation pour la pluralité de pistes doivent être calculés, le système de commande informatique configuré pour déterminer progressivement un ou plusieurs motifs d'ablation selon l'ordre d'ablation pour réduire l'amplitude du paramètre d'uniformité pour le pneumatique (40, 400), ledit système de commande informatique configuré en outre pour commander sélectivement le dispositif d'ablation de telle manière que du matériau de pneumatique (40, 400) est sélectivement enlevé d'au moins un talon (42) du pneumatique (40, 400) selon les un ou plusieurs motifs d'ablation.

FIG. 1

FIG. 2

FIG. 3

FIG. 4

FIG. 5

FIG. 6

FIG. 7

100

```
┌─────────────────────────────────────────────┐
│ IDENTIFY UNIFORMITY PARAMETER OF INTEREST FOR │ 102
│ UNIFORMITY CORRECTION (OPTIONALLY INCLUDING   │
│ SELECTION OF HARMONICS OF INTEREST)           │
└─────────────────────────────────────────────┘
                      │
                      ▼
┌─────────────────────────────────────────────┐
│ IDENTIFY A PLURALITY OF TRACKS ALONG          │ 104
│ A BEAD OF TIRE                                │
└─────────────────────────────────────────────┘
                      │
                      ▼
┌─────────────────────────────────────────────┐
│ DETERMINE ABLATION ORDER FOR A PLURALITY OF   │ 106
│ TRACKS BASED ON SENSITIVITY DATA              │
└─────────────────────────────────────────────┘
                      │
                      ▼
┌─────────────────────────────────────────────┐
│ PROGRESSIVELY CALCULATE ONE OR MORE ABLATION  │ 108
│ PATTERNS ACCORDING TO THE ABLATION ORDER TO   │
│ REDUCE THE MAGNITUDE OF THE UNIFORMITY        │
│ PARAMETER                                     │
└─────────────────────────────────────────────┘
                      │
                      ▼
┌─────────────────────────────────────────────┐
│ OPTIONALLY DETERMINE DIRECT ADDRESS           │ 110
│ COMMANDS FOR THE ONE OR MORE ABLATION         │
│ PATTERNS                                      │
└─────────────────────────────────────────────┘
                      │
                      ▼
┌─────────────────────────────────────────────┐
│ SELECTIVELY REMOVE TIRE MATERIAL FROM THE     │ 112
│ BEAD OF THE TIRE BY LASER ABLATION ACCORDING  │
│ TO THE ONE OR MORE ABLATION PATTERNS          │
└─────────────────────────────────────────────┘
```

FIG. 8

24

**FIG. 9**

| | |
|---|---|
| PERFORM SENSITIVITY MEASUREMENTS FOR A PLURALITY OF TIRES | 122 |
| DETERMINE SENSITIVITY VECTORS FOR EACH OF THE PLURALITY OF TRACKS BASED ON THE SENSITIVITY MEASUREMENTS | 124 |
| RANK THE PLURALITY OF TRACKS BASED ON THE MAGNITUDES OF THE SENSITIVITY VECTORS | 126 |

**FIG. 10**

224

222

226

FIG. 11

232

236

234

FIG. 12

130

132

SELECT A TRACK FROM THE
ABLATION ORDER

134

CALCULATE ABLATION PATTERN FOR
THE TRACK TO REDUCE THE MAGNITUDE
OF THE UNIFORMITY PARAMETER

136

DETERMINE AN ESTIMATED UNIFORMITY
PARAMETER BASED ON A UNIFORMITY
EFFECT FOR THE CALCULATED
ABLATION PATTERN

140

SELECT NEXT TRACK
THE ABLATION ORDER

N

138

ESTIMATED
UNIFORMITY PARAMETER
LESS THAN THRESHOLD
?

Y

142

PASS CALCULATED ABLATION PATTERNS
TO DIRECT ADDRESS ROUTINE

FIG. 13

FIG. 14

FIG. 15

FIG. 16

FIG. 17

FIG.18

FIG.19

FIG.20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011002595 A1
- EP 0766079 A1
- US 5263284 A1
- US 2004068374 A1
- US 6139401 A
- US 2012059547 A1
- US 20120095587 A
- US 1166699 W